# EUROPÄISCHE PATENTSCHRIFT

(11) **EP 0 767 223 B1**
(45) Veröffentlichungstag und Bekanntmachung des Hinweises auf die Patenterteilung: **14.04.1999**
(21) Anmeldenummer: 96115915.9
(22) Anmeldetag: 04.10.1996
(51) Int. Cl.: C09D 5/16

(54) **Antifouling-Mittel**
Antifouling composition
Agent anti-salissure

(30) Priorität: 06.10.1995 DE 19537316
(43) Veröffentlichungstag der Anmeldung: 09.04.1997
(73) Patentinhaber: Leinos Naturfarben GmbH, 42579 Heiligenhaus (DE)
(72) Erfinder: Schumacher, Helge-Ortwin, 45149 Essen (DE)
(74) Vertreter: Cohausz & Florack

(56) Entgegenhaltungen:
- DE-A- 2 510 417

## Beschreibung

Während der Lagerung und des Gebrauchs von Motor- und Segelbooten im Wasser setzen sich auf dem Unterwasserschiff tierische und pflanzliche Organismen ab, die die Laufeigenschaften herabsetzen und bei Kunststoffbooten den sogenannten Gelcoat mechanisch oder chemisch beeinträchtigen. Dieser tierische und pflanzliche Bewuchs an Schiffsrümpfen wird durch sogenannte Antifoulings verhindert. Diese können in Anstrichen enthalten sein oder als zusätzliche Antifoulingschicht aufgetragen werden.

Neben ihrer Wirkung als bewuchshemmende Mittel ist es wichtig, daß Antifoulingschichten die Lauf- oder Gleiteigenschaften des Bootes nicht beeinträchtigen. Eine Reihe von Antifoulings, die diese Eigenschaften erfüllen, sind derzeit bekannt. Die darin enthaltenen bewuchshemmenden Verbindungen sind jedoch nicht nur gegenüber Algen, Pilzen und Muscheln toxisch, sondern bilden ganz allgemein eine erhebliche Belastung der Gewässer und sind insbesondere im Hinblick auf ihren Eintritt in die Nahrungskette äußerst bedenklich.

Die DE-A-25 10 417 beschreibt ein Verfahren zum Beschichten von Oberflächen, die für den Einsatz unter Wasser vorgesehen sind, in dem man Wachs als wässrige Wachsdispersion aufträgt. Ein Emulgator wird in der Wachsdispersion in einer Menge von 0,2 bis 10 Gew.% der Dispersion eingesetzt, vorzugsweise aber in einer geringeren Menge, um das Abstreifen der fertigen Beschichtung durch das Meerwasser weitgehend auszuschalten. Die Beschichtung soll also möglichst lange auf dem beschichteten Gegenstand verbleiben, es handelt sich somit nicht um ein sogenanntes selbstabschleifendes Coating.

Der Erfindung liegt deshalb die Aufgabe zugrunde, ein Antifouling bereitzustellen, welches die oben genannten Anforderungen erfüllt und darüber hinaus keine derartigen Umweltbelastungen mit sich bringt.

Gelöst wird diese Aufgabe durch ein Antifouling, das eine wachsartige Substanz, ein emulgierendes Mittel und ein Lösungsmittel enthält, wobei als emulgierendes Mittel Lanolin oder ein Emulgiergemisch auf der Basis von Lanolin in einer Menge von 20 bis 40 Gew.%, bezogen auf die gesamte Masse der Antifouling-Zusammensetzung und als Lösungsmittel ein Paraffinlösungsmittel mit 7 bis 14 Kohlenstoffatomen und/oder Wasser eingesetzt wird.

Weitere mögliche emulgierende Mittel sind Wollwachsalkohole, Alkaliseifen wie Natriumpalmitat und Kaliumoleat, Metallseifen wie Calciumdilaurat, Aminseifen wie Triethanolaminooleat, Alkylsulfate wie Natriumdodecylsulfat, Alkylsulfonate wie Natriumdodecyl-sulfonat, quartäre Ammoniumverbindungen wie Benzalkoniumbromid, Alkoniumchloride und Cetylpyridiniumchlorid, Phospholipide, Ampholytseifen wie die Betaine, höhere Fettalkohole wie Lauryl-, Cetyl- und Stearylalkohol, Partialfettsäureester mehrwertiger Alkohole wie Ethylenglykolmonostearat, Glycerinmonostearat und den Sorbitanfettsäureestern, Polyalkylenfettsäureester, Polyalkylenfettsäurealkoholether und/oder freien Fettsäuren sowie deren Salze.

Es wurde festgestellt, daß ein solches Antifouling die Laufeigenschaften eines Bootes gegenüber denjenigen eines unbehandelten Bootes verbessert und den Bewuchs des Unterwasserschiffs mit tierischen und pflanzlichen Organismen verhindert. Es wird angenommen, daß die guten Laufeigenschaften auf der Bildung einer Mikroemulsion der Grenzfläche zwischen Antifoulingschicht und Wasser beruhen und auf diese Art auch der Bewuchs der Oberfläche mit pflanzlichen oder tierischen Organismen verhindert wird.

Erfindungsgemäß eingesetzt werden als Matrixmaterial wachsartige hydrophobe Substanzen wie pflanzliche, tierische und synthetische Wachse, Kohlenwasserstoffwachse sowie deren Gemische.

Geeignete pflanzliche Wachse sind beispielsweise Carnaubawachs, Candelillawachs, Ouricuriwachs und Zuckerrohrwachs.

Als sehr geeignet erwiesen sich veredelte Montanwachse, Hartparaffinwachse und Fischer-Tropsch-Paraffine sowie Polyolefinwachse. Erfindungsgemäß zu verwendende Polyolefinwachse wären beispielsweise Polyethylene und Polypropylene, Copolymere von Ethylen und Propylen, sowie gegebenenfalls Vinylacetat und andere, mit Olefinen copolymerisierbare Monomere.

Besonders geeignet sind solche wachsartigen Materialien, die einen Erstarrungspunkt von deutlich über 50 °C, beispielsweise 70 °C, 80 °C und darüber aufweisen. Das erfindungsgemäße Gemisch muß streichfähig sein und nach Trocknung eine noch polierbare Schicht bilden.

Als Paraffinlösungsmittel werden vorzugsweise Isoparaffine mit 8 bis 12 Kohlenstoffatomen auch im Gemisch mit Wasser eingesetzt.

Als emulgierende Fettsäuren werden vorzugsweise solche mit 8 bis 24 Kohlenstoffatomen eingesetzt oder solche, die über einer Temperatur von 12° C fest sind.

Zur Verhinderung des Befalls mit pflanzlichen, tierischen oder bakteriellen Mikroorganismen - Mikrobewuchs - wird vorzugsweise Schöllkraut (Herba Chelidonii) in Form von Pulvern, Extrakten oder dessen Inhaltsstoffe in dem erfindungsgemäßen Antifouling eingesetzt.

Ein Paraffinlösungsmittel oder Wasser kann eingesetzt werden, um eine gut streichfähige Konsistenz zu erreichen.

Das erfindungsgemäße Antifouling ist eine hochviskose, aber gut streichfähige Masse. Vorzugsweise wird das wachsartige Material in einer Menge von 30 bis 60 Gew.% und das Paraffinlösungsmittel oder Wasser in einer Menge von 20 bis 40 Gew.%, bezogen auf die gesamte Masse der Antifouling-Zusammensetzung verwendet.

Das erfindungsgemäße Antifouling wird auf den Bootsrumpf aufgestrichen, trocknen gelassen und anschließend poliert. Wurden Kunststoffplatten mit den erfindungsgemäßen Mitteln behandelt, zeigte sich weder im strömenden noch im stehenden Salzwasser, Brackwasser und Süßwasser ein Bewuchs mit tierischen und pflanzlichen Organismen.

## Patentansprüche

1. Antifouling, enthaltend eine wachsartige Substanz, ein emulgierendes Mittel und ein Lösungsmittel, **dadurch gekennzeichnet, daß** als emulgierendes Mittel Lanolin oder ein Emulgiergemisch auf der Basis von Lanolin in einer Menge von 20 bis 40 Gew.%, bezogen auf die gesamte Masse der Antifouling-Zusammensetzung, enthalten ist und das Lösungsmittel ein Paraffinlösungsmittel mit 7 bis 14 Kohlenstoffatomen und/oder Wasser ist.

2. Antifouling nach Anspruch 1, **dadurch gekennzeichnet, daß** die wachsartige Substanz einen Erstarrungspunkt ≥ 50°C aufweist.

3. Antifouling nach Anspruch 1 oder 2, **dadurch gekennzeichnet, daß** das Paraffinlösungsmittel einen überwiegenden Anteil Isoparaffine mit 8 bis 12 Kohlenstoffatomen enthält.

4. Antifouling nach Anspruch 1 bis 3, **dadurch gekennzeichnet, daß** Herba Chelidonii (Schöllkraut) in Form eines Pulvers, Extraktes oder einzelner Substanzen aus demselben enthalten ist.

## Claims

1. Anti fouling composition containing a waxy substance, an emulsifier, and a solvent, characterized in that the anti fouling composition contains as emulsifier lanolin or an emulsifier mixture on the basis of lanolin in an amount of 20 to 40% by weight with respect to the total weight of the anti fouling composition, and in that the solvent is a paraffinic solvent having 7 to 14 carbon atoms and/or water.

2. Anti fouling composition according to claim 1, characterized in that the solidifying temperature of the waxy substance is ≥ 50°C.

3. Anti fouling composition according to claim 1 or 2, characterized in that the paraffinic solvent contains a major portion of isoparaffines having 8 to 12 carbon atoms.

4. Anti fouling composition according to claims 1 to 3, characterized in that it contains herba chelidonii as a powder, extract or selected substances thereof.

## Revendications

1. Composition maritime antisalissure, comprenant une substance cireuse, un émulsionnant et un solvant, caractérisé en ce que, comme émulsionnant on utilise la lanoline ou un mélange d'émulsionnants à base de lanoline en une quantité de 20 à 40 % en poids du poids total de la composition antisalissure et le solvant est un solvant paraffinique de 7 à 14 atomes de carbone et/ou de l'eau.

2. Composition antisalissure selon la revendication 1 caractérisé en ce que la substance cireuse présente un point de solidification égal ou supérieur à 50 °C.

3. Composition antisalissure selon les revendications 1 ou 2 caractérisé en ce que le solvant paraffinique comprend une partie prédominante d'isoparaffine comprenant de 8 à 12 atomes de carbone.

4. Composition antisalissure selon les revendications 1 à 3, caractérisé en ce qu'il comprend du Herba Chelidonii (Schellkraut) sous forme de poudre, extrait ou toutes substances pouvant en être isolée.
